# EUROPÄISCHE PATENTSCHRIFT

(11) **EP 1 219 683 B1**
(45) Veröffentlichungstag und Bekanntmachung des Hinweises auf die Patenterteilung: **24.03.2004**
(21) Anmeldenummer: 02004226.3
(22) Anmeldetag: 25.10.1995
(51) Int. Cl.: C09B 44/16, D06P 1/08, D21H 21/28, C09B 67/32, C09B 43/16

(54) **Kationische Imidazolazofarbstoffe**
Cationic imidazolazo dyestuffs
Colorants cationiques de type imidazolazoique

(30) Priorität: 03.11.1994 CH 328694
(43) Veröffentlichungstag der Anmeldung: 03.07.2002
(62) Teilanmeldung aus: 95810659.3
(73) Patentinhaber: Ciba Specialty Chemicals Holding Inc., 4057 Basel (CH)
(72) Erfinder: Möckli, Peter, 4124 Schönenbuch (CH)

(56) Entgegenhaltungen:
- EP-A- 0 174 586
- EP-A- 0 184 991
- DE-A- 3 111 199
- DE-B- 1 098 642
- DE-B- 1 137 815
- US-A- 3 086 003
- "CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, Bd. 60, Nr. 9, 27. April 1964 (1964-04-27), XP002144548 ISSN: 0009-2258 & H.BAUMANN UND J.DEHNERT: CHIMIA, Bd. 15, Nr. 1, 1961, Seiten 163-8, AARAU, CH ISSN: 0009-4293

## Beschreibung

DE 11378159 offenbart Kationische Imidazolafarbstoffe zum Färben von Textilmaterialien

Die vorliegende Erfindung betrifft neue kationische Imidazolazofarbstoffe, Verfahren zu deren Herstellung, deren Verwendung zum Färben von Textilmaterialien und insbesondere von Papier sowie zur Synthese dieser Farbstoffe geeignete Zwischenprodukte.

Die neuen Imidazolazofarbstoffe entsprechen der Formel 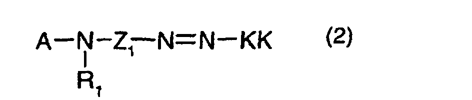 oder 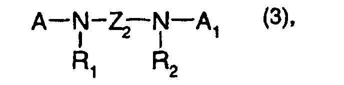 worin A und A₁ unabhängig voneinander je einen Rest der Formel 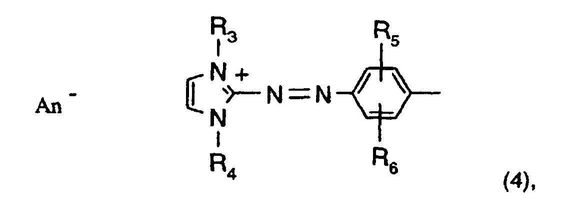 R₁ und R₂ unabhängig voneinander je Wasserstoff oder gegebenenfalls substituiertes C₁-C₄-Alkyl bedeuten oder zusammen mit den beiden N-Atomen, an die sie gebunden sind, und mit Z₂ einen 5-, 6- oder 7-Ring bilden,
Z₁ den Rest eines aromatischen Diamins,
Z₂ den Rest eines aliphatischen Diamins,
KK der Rest einer Kupplungskomponente,
R₃ und R₄ unabhängig voneinander je Wasserstoff oder gegebenenfalls substituiertes C₁-C₄-Alkyl,
R₅ und R₆ unabhängig voneinander je Wasserstoff oder gegebenenfalls substituiertes C₁-C₄-Alkyl oder C₁-C₄-Alkoxy und
An ein farbloses Anion bedeutet.

Unter Alkylresten sind erfindungsgemäss generell offenkettige, verzweigte oder cyclische Alkylgruppen zu verstehen. Cycloalkyl weist vorzugsweise 5 bis 8 C-Atome, offenkettiges Alkyl vorzugsweise 1 bis 8, insbesondere 1 bis 4 C-Atome auf.

Als unverzweigtes oder verzweigtes offenkettiges Alkyl kommen z.B. in Frage: Methyl, Ethyl, n- und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Carboxy, Halogen, Cyan, C₁-C₄-Alkoxy, durch C₁-C₄-Alkoxy, das durch Hydroxy substituiert ist, durch Amino, Alkylamino, Dialkylamino, Aminocarbonyl, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann.

Geeignete Reste dieser Art sind z.B.: Hydroxyethyl, 2-Hydroxypropyl-1, 1-Hydroxy-isopropyl, 2-Hydroxy-isopropyl, 2,3-Dihydroxypropyl-1, Methoxyethyl, Ethoxymethyl, Methoxycarbonyl oxyethyl, Chlorethyl, Cyanethyl, Benzyl, 1-Phenylethyl, 2-Phenylethyl, Dimethylaminoethyl, Diethylaminoethyl, Hydroxyethylaminoethyl, Dihydroxyethylaminoethyl, Methoxycarbonylethyl oder Aminocarbonylethyl.

Bei Cycloalkyl handelt es sich vor allem um Cyclopentyl und Cyclohexyl; als Substituent kommen vor allem C₁-C₄-Alkyl, insbesondere CH₃, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substituiert sein, z.B. durch die als Substituenten der Alkylgruppen aufgeführten Reste, insbesondere durch Hydroxy oder C₁-C₄-Alkoxy. Als substituierte Alkoxyreste kommen z.B. Hydroxyethoxy, Methoxyethoxy, 2-Hydroxypropoxy, 1,2-Dihydroxypropoxy-3 oder 1,2-Dimethoxypropoxy-3 in Frage.

Unter Halogen ist Fluor, Brom, Jod oder vor allem Chlor zu verstehen.

Als Reste eines aliphatischen Diamins kommen für Z₂ z.B. Alkylendiamine in Frage, deren Alkylengruppen geradkettig, verzweigt oder cyclisch sein können. Die Alkylengruppen können ausserdem substituiert sein, z.B. durch Halogen, Alkoxy oder Hydroxy oder die Alkylenketten können durch Heteroatome, z.B. -O- oder -NR₁- unterbrochen sein.

Geeignete Alkylenreste sind z.B. Ethylen, 1,3-Propylen, 1,2-Propylen, 1,2-Butylen, 1,4-Butylen, 1,6-Hexyten, 1,8-Octylen, 1,12-Dodecylen, 1,16-Hexadecylen, 1,4-Cyclohexylen, 2-Hydroxy-1,3-propylen, 2-Chlor-1,3-Propylen oder 3-Oxa-1,5-pentylen.

Z₂ kann auch jeweils zusammen mit den beiden benachbarten N-Atomen und R₁ und R₂ einen gegebenenfalls substituierten 5-, 6-, oder 7-Ring bilden, der weitere Heteroatome enthalten kann. In Frage kommt vor allem der Piperazinring.

Als Reste eines aromatischen Diamins kommen für Z₁ z.B. 1,4-Phenylen oder 1,4-Naphthylen in Betracht. Die aromatischen Reste können substituiert sein, z.B. durch Alkyl, Alkoxy oder Halogen.

Als Rest eines aliphatischen Diamins bildet Z₂ jeweils zusammen mit den beiden benachbarten N-Atomen und R₁ und R₂ einen Piperazinring.

Z₂ ist als Rest eines aliphatischen Diamins vor allem ein unsubstituiertes C₈-C₁₆-Alkylen, insbesondere ein C₁₀-C₁₄-Alkylen.

Falls R₁ und R₂ nicht Teile eines 5-, 6- oder 7-Ringes sind, so bedeuten sie vor allem Methyl oder Wasserstoff.

Als Rest eines aromatischen Diamins ist Z₁ vor allem ein unsubstituierter Phenylen- oder Naphthylenrest, insbesondere ein 1,4-Phenylenrest.

In den Farbstoffen der Formeln (2) und (3) sind A und A, vorzugsweise jeweils Reste der Formel (4), worin R₃ und R₄ je C₁-C₄-Alkyl, insbesondere je Methyl oder Ethyl bedeuten. R₅ und R₆ bedeuten vorzugsweise Methoxy, Methyl oder vor allem Wasserstoff.

Als Kupplungskomponente KK kommen die bei Azofarbstoffen üblichen und aus der einschlägigen Literatur bekannten Kupplungskomponenten in Frage.

Aus der Vielzahl der Möglichkeiten seien beispielsweise erwähnt: Kupplungskomponenten der Benzolreihe, der Naphthalinreihe, der offenkettigen methylenaktiven Verbin dungen (wie z.B. der Acylacetarylamide) sowie der heterocyclischen Reihe.

Beispiele für die genannten Reste von Kupplungskomponenten KK sind Reste aus der Reihe der Acylacetarylamide, Phenole, Naphthole, Pyridone, Chinolone, Pyrazole, Indole, Diphenyl amine, Aniline, Aminopyridine, Pyrimidine, Pyrimidone, Naphthylamine, Aminothiazole, Thiophene oder Hydroxypyridine.

Besonders zu erwähnende Reste KK sind solche aus der Reihe der Acetoacetanilide, Phenole, Aniline, Diphenylamine, Naphthylamine, Indole, Chinoline, Pyridone, Pyrazole, Chinolone und Aminopyridine.

Diese Kupplungskomponenten können weitere Substituenten tragen, die in der Farbstoffchemie für Kupplungskomponenten üblich sind, beispielsweise Hydroxy, Amino, Alkylamino, Dialkylamino, Halogen, Alkoxy, Aryl, Aryloxy, Alkylcarbonylamino, Arylcarbonylamino, Alkylsulfonylamino oder Sulfo.

Wegen ihrer besonders guten färberischen Eigenschaften für das Färben von Papier sind solche Farbstoffe der Formel(2) besonders bevorzugt, bei denen KK den Rest einer Naphtholsulfosäure, eines Acetessigsäureanilids oder Triamino- oder Trihydroxypyrimidins bedeutet.

Als Anion An kommen sowohl anorganische wie organische Anionen in Frage; beispielsweise sind genannt: Halogenid-, wie Chlorid-, Bromid- oder Jodid-, Sulfat-, Hydrogensulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Verbindungen der Formel (8) sind Zwischenprodukte im Verfahren zur Herstellung von Farbstoffe der Formel (2). 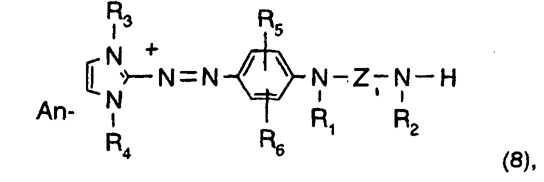 worin Z, unsubstitutiertes oder durch Alkyl, Alkoxy oder Halogen substituiertes 1,4-Phenylen oder 1,4-Naphthylen ist, und
die Reste R₁, R₂, R₃, R₄, R₅, R₆ und An die unter den Formeln (2), (3) und (4) angegebenen Bedeutungen aufweisen, und Hal Fluor, Brom, Jod oder Chlor bedeuten.

Man erhält sie z.B., indem man eine Verbindung der Formel 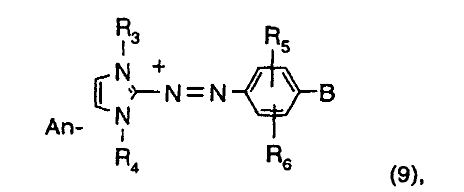 mit einem Diamin der Formel 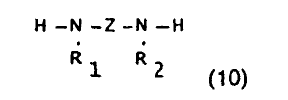 umsetzt,wobei
B Alkoxy oder Halogen bedeutet und
Z die oben unter der Formel (8) angegebene bedeutung besitzt, und die Reste R₁, R₂, R₃, R₄, R₅, R₆, und An die unter den Formeln (2), (3) und (4) angegebenen Bedeutungen aufweisen.

B bedeutet insbesondere C₁-C₄-Alkoxy, vor allem Methoxy, oder Chlor.

Die Verbindungen der Formeln (9) und (10) sind bekannt oder können auf an sich bekannte Art und Weise hergestellt werden. Man erhält beispielsweise die Verbindungen der Formel (9) durch Diazotieren von 4-Alkoxyanilinen, Kuppeln mit einem Imidazol und anschliessendes Alkylieren und Quaternieren.

Bei der Umsetzung einer Verbindung der Formel (9) mit einem Diamin der Formel (10) zu einer Verbindung der Formel (8) arbeitet man z.B. bei einer Temperatur zwischen ca. 40 und 140 □C, vorzugsweise zwischen 50 und 120 □C, gegebenenfalls unter Druck und/oder in Inertgasatmosphäre, und in einem inerten Lösungsmittel, z.B. in Wasser oder aliphatischen Alkoholen, z.B. C₁-C₈-Alkoholen, wie Methanol, Ethanol oder vor allem Isopropanol, insbesondere jedoch in aprotischen polaren Lösungsmitteln, wie Dimethylformamid oder Dimethylsulfoxid. Bei unter Reaktionsbedingungen flüssigen Diaminen kann gegebenenfalls auf ein Lösungsmittel verzichtet werden.

Falls bei der eingesetzten Verbindung der Formel (10) Z ein aromatisches Amin ist, so erhält man fast ausschliesslich Umsetzungsprodukte der Formel (8), d.h. solche aus einem Molekül der Verbindung der Formel (9) mit einem Molekül der Verbindung der Formel (10). Ist Z dagegen der Rest eines aliphatischen Amins, so werden ausserdem Reaktionsprodukte der oben angegebenen Formel (3) gebildet, d.h. Umsetzungsprodukte aus zwei Molekülen der Verbindung der Formel (9) mit einem Molekül der Verbindung der Formel (10).

Durch geeignete Wahl der Reaktionsbedingungen kann man die Reaktion so steuern, dass zum überwiegenden Teil oder sogar nahezu ausschliesslich das jeweils gewünschte Reaktionsprodukt der Formel (8) oder der Formel (3) gebildet wird. Die entsprechenden Arbeitstechniken sind im Prinzip bekannt.

Die Verbindungen der Formel (8) stellen brauchbare Zwischenprodukte zur Herstellung von Farbstoffen dar. Ausserdem eignen sie sich selbst bereits zum Färben von Materialien, die üblicherweise mit kationischen Farbstoffen gefärbt werden, wie z.B. Polyacrylnitril, Holzschliff und Haare, insbesondere lebende menschliche Haare. Man erhält Färbungen in roten oder violetten Farbtönen mit guten Echtheiten.

Solche Verbindungen der Formel (8), worin R₂ Wasserstoff bedeutet, lassen sich ausserdem diazotieren und mit einer Kupplungskomponente KK der oben angegebenen Bedeutung kuppeln, wobei man einen Farbstoff der Formel (2) erhält.

Die Diazotierung der Verbindungen der Formel (8), worin R₂ Wasserstoff bedeutet, erfolgt in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Phosphorsäure und Essigsäure. Zweckmässig wird die Diazotierung bei Temperaturen von -10 bis 30□C, z.B. von -10□C bis Raumtemperatur, durchgeführt.

Die Kupplung der diazotierten Verbindung der Formel (8), worin R₂ Wasserstoff bedeutet, auf eine Kupplungskomponente KK erfolgt ebenfalls in bekannter Weise, beispielsweise in schwach saurem bis schwach alkalischem, wässrigem oder wässrig-organischem Medium, vorteilhaft bei Temperaturen von -10 bis 30 □C, insbesondere unter 10□C. Diazotierung und Kupplung können beispielsweise im Eintopfverfahren, also im gleichen Reaktionsmedium durchgeführt werden.

Die erfindungsgemässen Farbstoffe der Formel (2), (3) eignen sich zum Färben von Polyacrylnitrilmaterialien und Leder, insbesondere jedoch zum Färben von Papier, da sie eine hohe Substantivität für dieses Substrat aufweisen. Die Farbstoffe, bei denen Z₂ den Rest eines aliphatischen Amins bedeutet, ergeben Färbungen in roten Farbtönen, die Farbstoffe, bei denen Z₁ den Rest eines aromatischen Amins bedeutet, ergeben Färbungen in violetten Farbtönen. Die erhaltenen Färbungen zeichnen sich durch gute Echtheiten aus. Die Abwässer sind in den meisten Fällen völlig farblos.

Die Farbstoffe der Formel (2), (3) können sowohl in Mischungen untereinander als auch in Mischungen mit anderen kationischen Farbstoffen eingesetzt werden. Diese Farbstoffmischungen stellen einen weiteren Gegenstand der vorliegenden Erfindung dar. Man erhält mit solchen Mischungen auf Papier Färbungen in sehr schönen neutralen Blautönen. Als Kupferphthalocyaninfarbstoffe sind die aus der Literatur bekannten und zum Färben von Papier brauchbaren Farbstoffe geeignet, insbesondere die in EP-A-0184991, DE-A-3111199 und EP-A-0174586 beschriebenen Farbstoffe.

Die Farbstoffe der Formel (2), (3) können als feste oder flüssige Handelsform formuliert und zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dex trine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formel (2), (3) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (2), (3), welche dadurch gekennzeichnet sind, dass sie mindestens 5, beispielsweise 8 bis 30Gewichtsprozent Farbstoff, bezogen auf das Gesamtgewicht der Lösung, enthalten.

Konzentrierte wässrige Lösungen von Farbstoffen der Formel (2), (3) können z.B. hergestellt werden, indem man die bei der Herstellung des Farbstoffes anfallende Farbstoffsuspension filtriert, gegebenenfalls entsalzt, z.B. durch ein Membrantrennverfahren, anschliessend mit einer Säure, z.B. Ameisensäure, Essigsäure oder Milchsäure, und durch Zusatz von Hilfsmitteln, wie Harnstoff, □-Caprolactam oder Polyethylenglykol stabilisiert.

Die so hergestellten Farbstofflösungen enthalten vorzugsweise auf 100Teile Farbstoff 400 bis 900Teile Wasser, 0 bis 400 Teile einer organischen Carbonsäure, z.B. Ameisensäure, Essigsäure, Propionsäure oder Milchsäure und 0 bis 200Teile weitere Zusätze, wie Harnstoff, □-Caprolactam oder Polyethylenglykol.

Die erfindungsgemässen wässrigen Konzentrate, die bei Lagerungstemperaturen bis zu-5□C stabil sind, eignen sich zum Färben von Papier, auf welchem sie attraktive rote bis violette Farbtöne ergeben.

Die Farbstoffe der Formel (2), (3) können ausserdem auch zum Färben von Textilmaterialien aus Cellulose, z.B. Baumwolle, sowie zum Färben von Leder und Glasfasern eingesetzt werden.

In den nachfolgenden Beispielen beziehen sich Teile und Prozente auf das Gewicht und die Temperaturen sind in Celsiusgraden angegeben.
Beispiel 1: 26,7 Teile der Verbindung der Formel 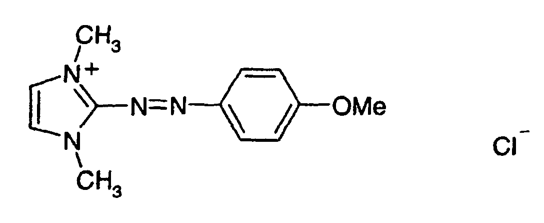 werden mit 13 Teilen p-Phenylendiamin in 50 Teilen Isopropanol verrührt. Unter Stickstoff werden bei einer Badtemperatur von 100° C 24 Teile Isopropanol abdestilliert. Die Badtemperatur wird auf 90° C abgesenkt und die Reaktionsmasse 16 Stunden bei dieser Temperatur gerührt. Danach wird das Heizbad entfernt und das vorher abdestillierte Isopropanol wieder zugetropft. Man rührt, bis Zimmertemperatur erreicht ist, filtriert, wäscht gut mit Isopropanol und trocknet. Man erhält 34 Teile eines schwarzen Kristallpulvers, welches zu 92 Gew. % aus der Verbindung der Formel 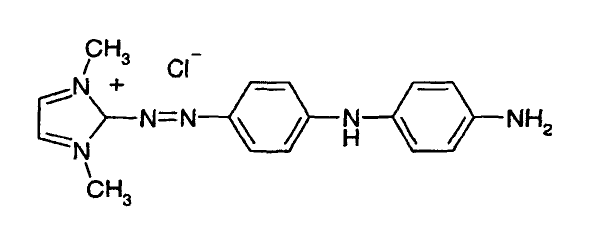 besteht Durch Umkristallisation aus Ethanol kann man sie in reiner Form erhalten. Sie färbt Textilmaterial aus Polyacrylnitril, holzschliffhaltiges Papier und Haare in violetten Farbtönen.
Beispiel 2: 62,2 Teile der Verbindung der Formel 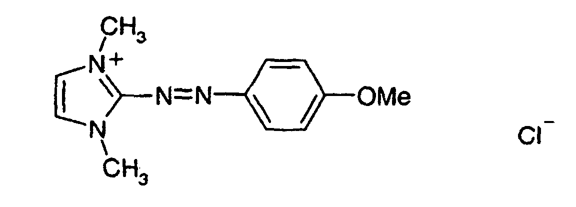 als salzhaltiges Rohprodukt mit einem Gehalt von 85,8 Gew. % werden in 43 Teilen Dimethylformamid mit 21,6 Teilen p-Phenylendiamin auf 115° C erwärmt. Nach 4,5 Stunden lässt man die Reaktionsmasse unter Rühren auf 100° C abkühlen, entfernt das Heizbad und tropft innerhalb von 60 Minuten 140 Teile Methyl-isobutylketon zu. Nach dem Erkalten wird der schön kristalline Niederschlag abgenutscht und mit Methyl-isobutylketon gewaschen. Nach dem Trocknen erhält man 69,6 Teile dunkles Kristallpulver, welches zu 80 % aus der gleichen violetten Verbindung besteht, die gemäss Beispiel 1 erhalten wird.
Beispiel 3: Man verrührt 40 Teile der Ausgangsverbindung aus Beispiel 1 mit 20 Teilen Piperazin in 80 Teilen Isopropanol bei 60° C während 2 Stunden, lässt abkühlen und filtriert das in geringer Menge ausgefallene Dikondensationsprodukt ab. Die Mutterlauge wird langsam mit 380 Teilen tert.-Butyl-methylether versetzt und das ausgefällte Produkt filtriert. Der Presskuchen wird erneut in 80 Teilen Isopropanol gelöst und wieder mit tert.-Butylmethylether ausgefällt. Nach dem Trocknen erhält man 46 Teile eines violetten Kristallpulvers der Formel 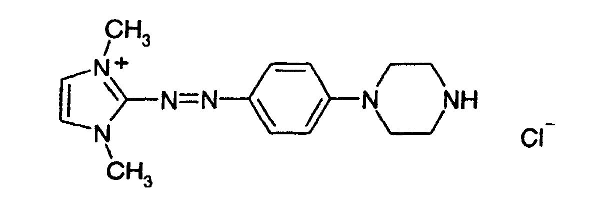 das sich zum Färben von Textilmaterial aus Polyacrylnitril, holzschliffhaltigem Papier und Haaren in violetten Farbtönen eignet.
Beispiel 4: Man verrührt 38 Teile der Ausgangsverbindung aus Beispiel 1 mit 70 Teilen geschmolzenem Hexamethylendiamin bei 85° C während 2 Stunden, lässt danach auf 50° C abkühlen und versetzt langsam mit 190 Teilen tert.-Butyl-methylether. Das ausgefallene Produkt wird abgenutscht und der Rückstand in 70 Teilen Isopropanol heiss gelöst und wieder abgekühlt. Man versetzt dann wiederum mit 190 Teilen tert.-Butyl-methylether, filtriert den ausgefallenen Niederschlag ab und trocknet. Man erhält 43 Teile eines violetten Kristallpulvers der Formel 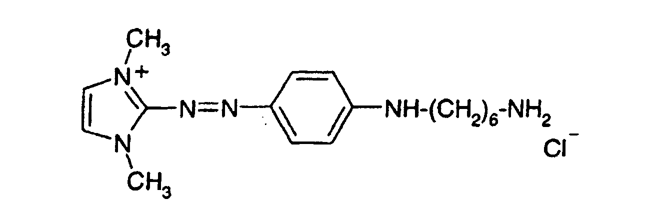
Beispiel 5: Man verrührt 40 Teile der Ausgangsverbindung aus Beispiel 1 mit 75 Teilen 1,3-Diaminopropan bei 60° C während 1 Stunde, lässt abkühlen und versetzt mit 380 Teilen tert.-Butyl-methylether. Das ausgefallene Produkt wird abgenutscht und der Rückstand in 100 Teilen Isopropanol heiss gelöst und wieder abgekühlt. Man versetzt dann wiederum mit 380 Teilen tert.-Butyl-methylether, filtriert den ausgefallenen Niederschlag ab und trocknet. Man erhält 41 Teile eines roten Kristallpulvers der Formel 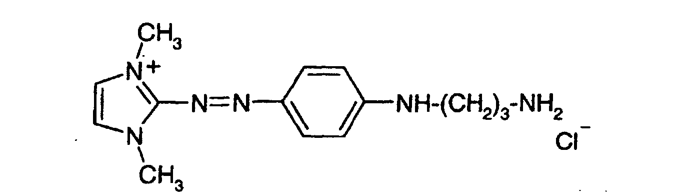
Beispiel 6 (Referenz Beispiel): 4 Teile des Produktes gemäss Beispiel 3 werden in 100 Teilen Wasser mit 1,6- Teilen des Produktes aus Beispiel 4 3 Stunden lang auf 85° C erhitzt, wobei der pH durch Zugabe von Natronlauge konstant bei 7,5 gehalten wird. Man lässt unter Rühren erkalten, entsalzt durch Dialyse wie im Beispiel 7 beschrieben und dampft zur Trockene ein. Man erhält 4,3 Teile des Farbstoffes der Formel 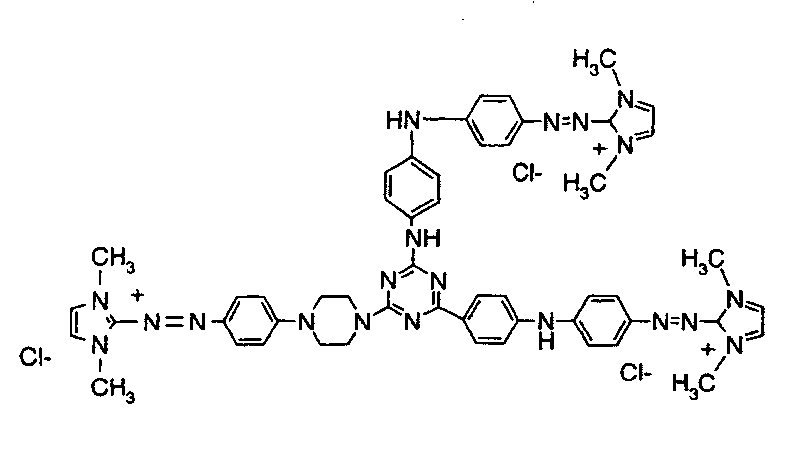 welcher sich ausgezeichnet zum Färben von gebleichtem Zellstoff eignet. Die Nuance der Färbungen liegt etwa in der Mitte zwischen dem stark rotstichigen Violett aus Beispiel 33 und dem blaustichigen Violett aus Beispiel 7.
Beispiel 7 (Referenzbeispiel): 0,92 Teile Cyanurchlorid werden in 100 Teilen Wasser von < 5° C suspendiert. Dann gibt man eine Lösung von 0,53 Teilen Diethanolamin in 8 Teilen Aceton zu und hält den pH durch Zugabe von Natronlauge bei 6. Nach 2 Stunden wird die kühlung entfernt, der pH auf 7 gestellt und weitere 2 Stunden bei 20° C gerührt. Man gibt nun 1,7 Teile des Produktes aus Beispiel 1 zu und erwärmt langsam auf 40° C. Wenn im Dünnschichtchromatogramm kein farbiges Edukt mehr zu sehen ist, werden noch 1,6 Teile des Produktes aus Beispiel 4 zugegeben und das Ganze 4 Stunden lang bei 80° C und pH 8,5 verrührt. Man lässt unter Rühren erkalten, entsalzt durch Dialyse wie im Beispiel 7 beschrieben, dampft auf 90 Teile ein, und bringt mit 10 Teilen Eisessig in Lösung. Der resultierende Farbstoff hat die Formel 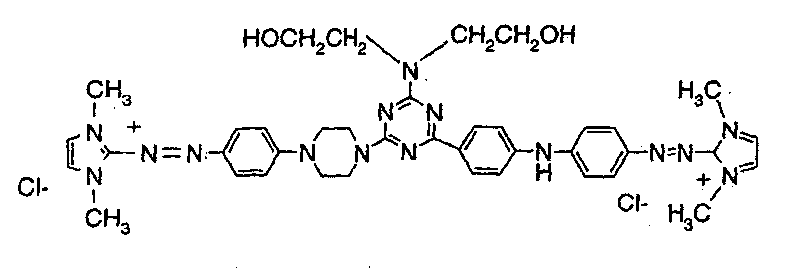 Er eignet sich ebenfalls ausgezeichnet zum Färben von gebleichter Cellulose. Die Nuance ist etwas röter als das Violett aus Beispiel 34.
Beispiel 8: 1,3 Teile der gemäss Beispiel 1 hergestellten Verbindung werden in 10,5 Teilen 1 M HCI und 30 Teilen Wasser gelöst und auf 0 bis 5° C abgekühlt. Dann tropft man innerhalb 15 Minuten 3,5 Teile 1 M Natriumnitritlösung zu. Ein eventueller Nitritüberschuss wird anschliessend durch Zugabe von Sulfaminsäure zurückgenommen.
   Die erhaltene Diazolösung wird langsam zu einer im Eisbad gekühlten Lösung von 2 Teilen der Kupplungskomponente der Formel 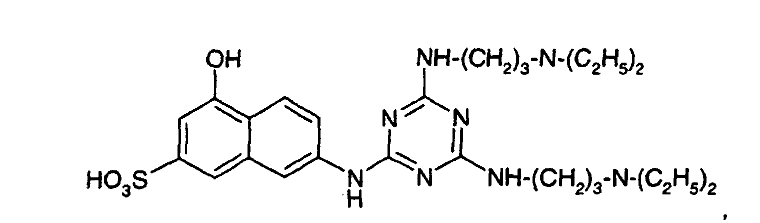 gelöst in 40 Teilen Wasser, zugetropft und der pH dabei konstant bei 7 gehalten. Nach beendeter Zugabe wird das Eisbad entfernt und noch 2 Stunden bei Raumtemperatur gerührt. Danach wird der pH auf 11 gestellt, der Niederschlag abgenutscht und der Rückstand mit Wasser gewaschen und getrocknet. Man erhält 3 Teile eines dunklen Farbstoffpulvers, dessen Hauptkomponente die Formel 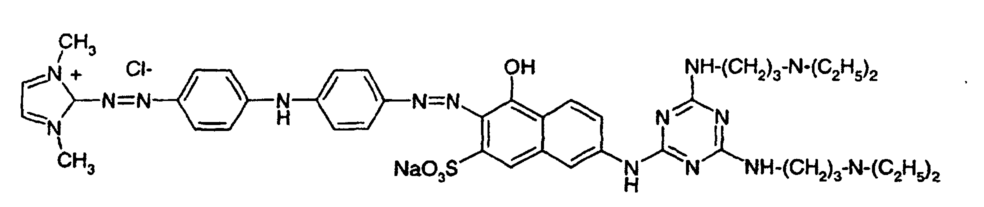 besitzt, und gebleichte Cellulose in graublauer Nuance färbt.
Beispiel 9: Arbeitet man wie im Beispiel 8 beschrieben, setzt jedoch als Kupplungskomponente 0,44 Teile Triaminopyrimidin ein, so erhält man 1,57 Teile des Farbstoffes der Formel 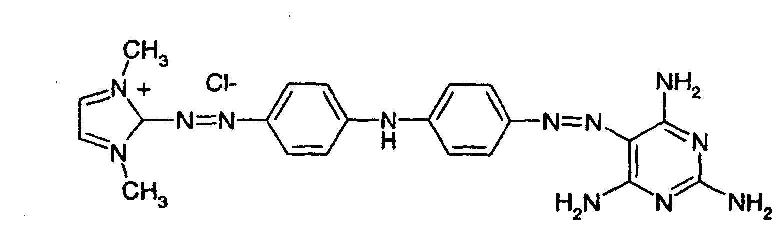 der gebleichte Cellulose in sehr intensiven grauvioletten Nuancen färbt und ein sehr gutes Aufziehvermögen auf diesem Material hat.
Beispiel 10: Arbeitet man wie im Beispiel 9 beschrieben, setzt jedoch als Kupplungskomponente 0,72 Teile Acetessigsäure-o-anisidid ein, so erhält man 1,8 Teile des Farbstoffes der Formel 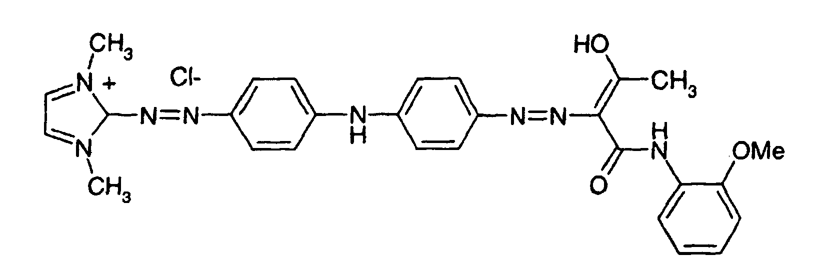 der gebleichte Cellulose in sehr intensiven grauvioletten Nuancen färbt und ein sehr gutes Aufziehvermögen auf diesem Material hat.
Beispiel 11: Man erwärmt eine Lösung aus 8 Teilen der Verbindung der Formel 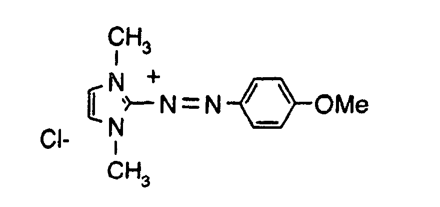 und 3,1 Teilen 1,12-Diaminododecan in 20 Teilen Ethanol während 20 Stunden auf 60° C. Nach dem Abkühlen wird filtriert und der Presskuchen in 50 Teilen Methanol gelöst. Man gibt 50 Teile Ethanol zu, destilliert das Methanol wieder ab und lässt auskristallisieren. Nach Filtration und Trocknung erhält man 5 Teile des Farbstoffes der Formel 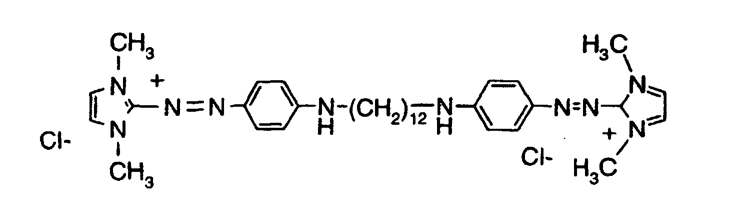 welcher gebleichte Cellulose in sehr brillanten Rottönen mit ausgezeichneten Echtheiten färbt.
Beispiel 12 (Referenzbeispiel): Man vermischt 100 Teile Holzschliff (Mahlgrad 22° SR) mit 1 Teil des Farbstoffes aus Beispiel 1 in Wasser (pH 6, Wasserhärte 10° dH, Temperatur 20°, Flotten verhältnis 1:40). Nach 15minütigem Rühren werden Papierblätter auf einem Frank-Blattbildner hergestellt.
   Man erhält eine violette Färbung mit guten Echtheiten. Das Abwasser ist völlig farblos.

## Patentansprüche

1. Verbindungen der Formel 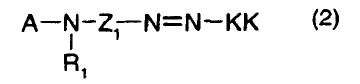 oder 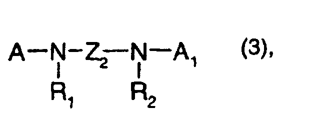 worin A und A₁ unabhängig voneinander je einen Rest der Formel 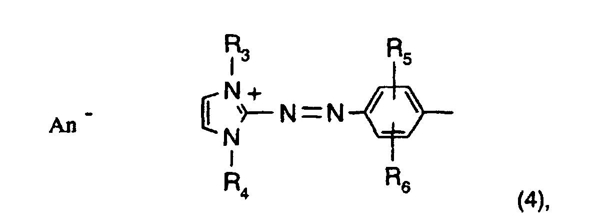 R₁ und R₂ unabhängig voneinander je Wasserstoff oder gegebenenfalls substituiertes C₁-C₄-Alkyl bedeuten oder zusammen mit den beiden N-Atomen, an die sie gebunden sind, und mit Z₂ einen 5-, 6- oder 7-Ring bilden,
Z₁ den Rest eines aromatischen Diamins,
Z₂ den Rest eines aliphatischen Diamins,
KK der Rest einer Kupplungskomponente,
R₃ und R₄ unabhängig voneinander je Wasserstoff oder gegebenenfalls substituiertes C₁-C₄-Alkyl,
R₅ und R₆ unabhängig voneinander je Wasserstoff oder gegebenenfalls substituiertes C₁-C₄-Alkyl oder C₁-C₄-Alkoxy und
An ein farbloses Anion bedeutet.

2. Farbstoffe gemäss Anspruch 1, **dadurch gekennzeichnet, dass** sie der Formel (2) entsprechen, worin Z₁ unsubstituiertes oder durch Alkyl, Alkoxy oder Halogen substituiertes 1,4-Phenylen oder 1,4-Naphthylen, vorzugsweise unsubstituiertes 1,4-Phenylen ist.

3. Farbstoffe gemäss Anspruch 1, **dadurch gekennzeichnet, dass** sie der Formel (3) entsprechen, worin Z₂ der Rest eines Alkylendiamins ist, dessen Alkylengruppen geradkettig, verzweigt oder cyclisch sind und unsubstituiert oder durch Halogen, Alkoxy oder Hydroxys substituiert sind, wobei die Alkylenketten durch -O- oder -NR₁- unterbrochen sein können.

4. Farbstoffe gemäss einem der Ansprüche 1 bis 3, **dadurch gekennzeichnet, dass** A und A₁ jeweils Reste der Formel (4) sind, worin R₃ und R₄ je Methyl oder Ethyl bedeuten.

5. Farbstoffe gemäss einem der Ansprüche 1 bis 4, **dadurch gekennzeichnet, dass** A und A₁ jeweils Reste der Formel (4) sind, worin R₅ und R₆ Methoxy, Methyl oder Wasserstoff bedeuten.

6. Farbstoffe gemäss einem der Ansprüche 1 bis 5, **dadurch gekennzeichnet, dass** KK eine Kupplungskomponente aus einer der folgenden Klassen ist: Acylacetarylamide, Phenole, Pyridone, Chinolone, Pyrazole, Indole, Diphenylamine, Aniline, Aminopyridine, Pyrimidine, Pyrimidone, Naphthylamine, Aminothiazole, Thiophene oder Hydroxypyridine, welche unsubstituiert oder durch Hydroxy, Amino, Alkylamino, Dialkylamino, Halogen, Alkoxy, Aryl, Aryloxy, Alkylcarbonylamino, Arylcarbonylamino, Alkylsulfonylamino oder Sulfo substituiert sind.

7. Farbstoffe gemäss Anspruch 6, **dadurch gekennzeichnet, dass** KK eine Kupplungskomponente aus einer der folgenden Klassen ist: Acetoacetanilide, Phenole, Aniline, Diphenylamine, Naphthylamine, Indole, Chinoline, Pyridone, Pyrazole, Chinolone und Aminopyridine, welche unsubstituiert oder durch Hydroxy, Amino, Alkylamino, Dialkylamino, Halogen, Alkoxy, Aryl, Aryloxy, Alkylcarbonylamino, Arylcarbonylamino, Alkylsulfonylamino oder Sulfo substituiert sind.

8. Verfahren zur Herstellung von Farbstoffen der Formel (2) gemäss Anspruch 1, **dadurch gekennzeichnet, dass** man eine Verbindung der Formel 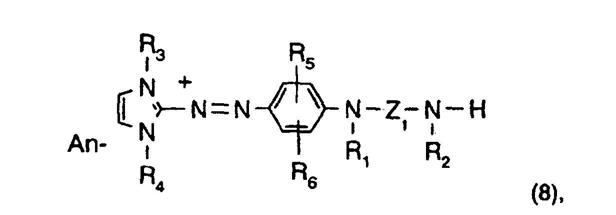 worin Z, unsubstitutiertes oder durch Alkyl, Alkoxy oder Halogen substituiertes 1,4-Phenylen oder 1,4-Naphthylen, und
die Reste R₁, R₃, R₄, R₅, R₆ und An die unter den Formeln (2) und (4) im Anspruch 1 angegebenen Bedeutungen aufweisen, und R₂ Wasserstoff bedeutet, diazotiert und mit einer Kupplungskomponente KK kuppelt.

9. Verfahren zur Herstellung von Farbstoffen der Formel (3) gemäss Anspruch 1, **dadurch gekennzeichnet, dass** man eine Verbindung der Formel 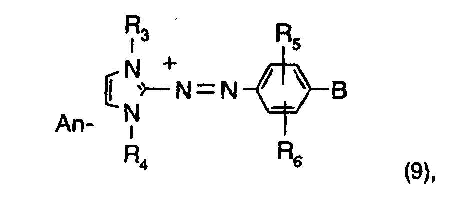 mit einem Diamin der Formel 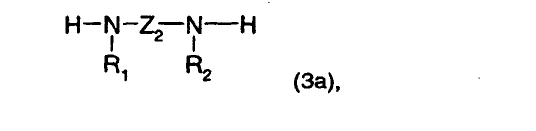 umsetzt,wobei
B Alkoxy oder Halogen bedeutet und
R₁, R₂, R₃, R₄, R₅, R₆, Z₂ und An die unter den Formeln (3) und (4) in Anspruch 1 angegebenen Bedeutungen aufweisen.

10. Verfahren zum Färben von Papier, **dadurch gekennzeichnet, dass** man das Papier mit einem Farbstoff der Formeln (2) oder (3) gemäss Anspruch 1 behandelt.

11. Das nach dem Verfahren gemäss Anspruch 11 erhaltene gefärbte Papier.

12. Feste Farbstoffzubereitungen zum Färben von Papier, **dadurch gekennzeichnet, dass** sie mindestens einen Farbstoff gemäss Anspruch 1 enthalten.

13. Flüssige Farbstoffzubereitungen zum Färben von Papier, **dadurch gekennzeichnet, dass** sie mindestens einen Farbstoff gemäss Anspruch 1 enthalten.

14. Farbstoffmischungen, enthaltend einen Farbstoff der Formel (2) oder (3) gemäss Anspruch 1 und einen kationischen Kupferphthalocyaninfarbstoff.

## Claims

1. A compound of the formula 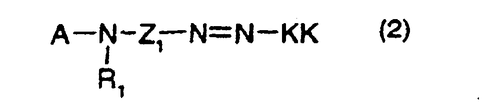 or 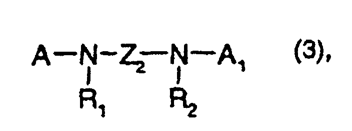 in which A and A₁ independently of one another are each a radical of the formula 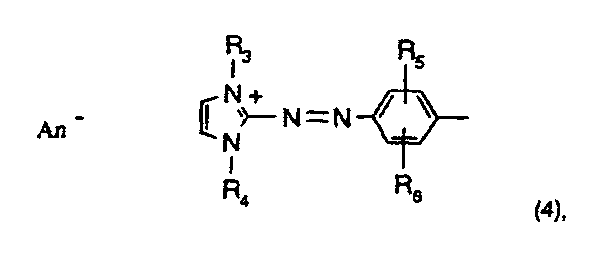 R₁ and R₂ independently of one another are each hydrogen or substituted or unsubstituted C₁-C₄alkyl or, together with the two nitrogen atoms to which they are attached and with Z₂, form a 5-, 6- or 7-membered ring,
Z₁ is the radical of an aromatic diamine,
Z₂ is the radical of an aliphatic diamine,
KK is the radical of a coupling component,
R₃ and R₄ independently of one another are each hydrogen or substituted or unsubstituted C₁-C₄alkyl,
R₅ and R₆ independently of one another are each hydrogen or substituted or unsubstituted C₁-C₄alkyl or C₁-C₄alkoxy and
An⁻ is a colourless anion.

2. A dye according to claim 1, which is of the formula (2) in which Z₁ is 1,4-naphthylene or 1,4-phenylene which is unsubstituted or substituted by alkyl, alkoxy or halogen, and is preferably unsubstituted 1,4-phenylene.

3. A dye according to claim 1, which is of the formula (3) in which Z₂ is the radical of an alkylenediamine whose alkylene groups are straight-chain, branched or cyclic and unsubstituted or substituted by halogen, alkoxy or hydroxy, in which the alkylene chains can be interrupted by -O- or -NR₁-.

4. A dye according to any one of claims 1 to 3, wherein A and A₁ are each radicals of the formula (4) in which R₃ and R₄ are methyl or ethyl.

5. A dye according to any one of claims 1 to 4, wherein A and A₁ are each radicals of the formula (4) in which R₅ and R₆ are methoxy, methyl or hydrogen.

6. A dye according to any one of claims 1 to 5, wherein KK is a coupling component from one of the following classes: acylacetarylamides, phenols, pyridones, quinolones, pyrazoles, indoles, diphenylamines, anilines, aminopyridines, pyrimidines, pyrimidones, naphthylamines, aminothiazoles, thiophenes or hydroxypyridines, which are unsubstituted or substituted by hydroxyl, amino, alkylamino, dialkylamino, halogen, alkoxy, aryl, aryloxy, alkylcarbonylamino, arylcarbonylamino, alkylsulfonylamino or sulfo.

7. A dye according to claim 6, wherein KK is a coupling component from one of the following classes: acetoacetanilides, phenols, anilines, diphenylamines, naphthylamines, indoles, quinolines, pyridones, pyrazoles, quinolones and aminopyridines, which are unsubstituted or substituted by hydroxyl, amino, alkylamino, dialkylamino, halogen, alkoxy, aryl, aryloxy, alkylcarbonylamino, arylcarbonylamino, alkylsulfonylamino or sulfo.

8. A process for the preparation of a dye of the formula (2) according to claim 1, which comprises diazotizing a compound of the formula 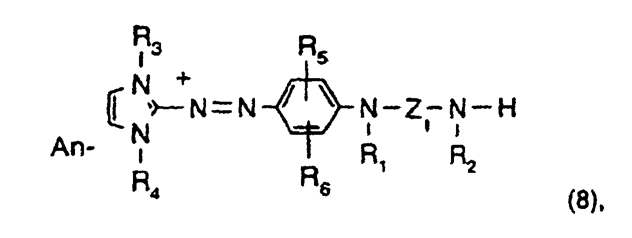 in which Z₁ is 1,4-naphthylene or 1,4-phenylene which is unsubstituted or substituted by alkyl, alkoxy or halogen, and the radicals R₁, R₃, R₄, R₅, R₆ and An⁻ are as defined in claim 1 under formulae (2) and (4) and R₂ is hydrogen, and coupling the product with a coupling component KK.

9. A process for the preparation of a dye of the formula (3) according to claim 1, which comprises reacting a compound of the formula 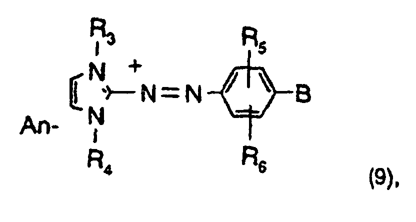 with a diamine of the formula 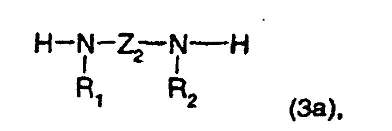 in which
B is alkoxy or halogen, and
R₁, R₂, R₃, R₄, R₅, R₆, Z₂ and An⁻ are as defined in claim 1 under formulae (3) and (4).

10. A method of dyeing paper, which comprises treating the paper with a dye of the formula (2) or (3) according to claim 1.

11. Dyed paper obtained by the method according to claim 10.

12. A solid dye preparation for the dyeing of paper, which comprises at least one dye according to claim 1.

13. A liquid dye preparation for the dyeing of paper, which comprises at least one dye according to claim 1.

14. A dye mixture comprising a dye of the formula (2) or (3) according to claim 1 and a cationic copper phthalocyanine dye.

## Revendications

1. Composés de formule 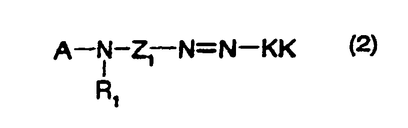 ou 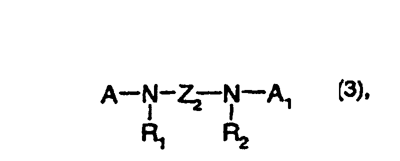 dans lesquelles A et A₁ représentent chacun, indépendamment l'un de l'autre, un groupe de formule 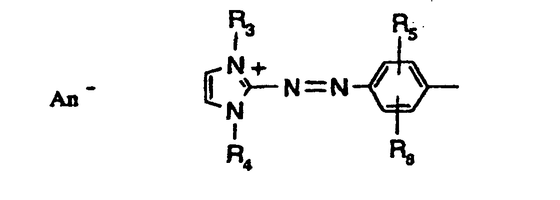 R₁ et R₂ représentent chacun, indépendamment l'un de l'autre, un atome d'hydrogène ou un groupe alkyle en C₁ à C₄ éventuellement substitué ou, conjointement avec les deux atomes d'azote auxquels ils sont liés, et avec Z₂, un cycle à 5, 6 ou 7 éléments,
Z₁ représente le radical d'une diamine aromatique,
Z₂ représente le radical d'une diamine aliphatique,
KK représente le radical d'un composant de copulation,
R₃ et R₄ représentent chacun, indépendamment l'un de l'autre, un atome d'hydrogène ou un groupe alkyle en C₁ à C₄ éventuellement substitué,
R₅ et R₆ représentent chacun, indépendamment l'un de l'autre, un atome d'hydrogène ou un groupe alkyle en C₁ à C₄ éventuellement substitué ou alcoxy en C₁ à C₄ et
An-représente un anion incolore.

2. Colorants selon la revendication 1, **caractérisés en ce qu'**ils répondent à la formule (2), dans laquelle Z₁ représente un groupe 1,4-phénylène ou 1,4-naphtylène non substitué ou substitué par un groupe alkyle, alcoxy ou par un atome d'halogène, de préférence un groupe 1,4-phénylène non substitué.

3. Colorants selon la revendication 1, **caractérisés en ce qu'**ils répondent à la formule (3), dans laquelle Z₂ représente le radical d'une alkylènediamine, dont les groupes alkylène sont linéaires, ramifiés ou cycliques et ne sont pas substitués ou sont substitués par un atome d'halogène, un groupe alcoxy ou hydroxy, les chaînes alkylène pouvant être interrompues par -O- ou -NR₁.

4. Colorants selon l'une quelconque des revendications 1 à 3, **caractérisés en ce que** A et A₁ représentent chacun des groupes de formule (4), dans laquelle R₃ et R₄ représentent chacun un groupe méthyle ou éthyle.

5. Colorants selon l'une quelconque des revendications 1 à 4, **caractérisés en ce que** A et A₁ représentent chacun des groupes de formule (4), dans laquelle R₅ et R₆ représentent un groupe méthoxy, méthyle ou un atome d'hydrogène.

6. Colorants selon l'une quelconque des revendications 1 à 5, **caractérisés en ce que** KK représente un composant de copulation issu de l'une des classes suivantes: les acylacétarylamides, les phénols, les pyridones, les quinolones, les pyrazoles, les indoles, les diphénylamines, les anilines, les aminopyridines, les pyrimidines, les pyrimidones, les naphtylamines, les aminothiazoles, les thiophènes ou les hydroxypyridines, lesquels ne sont pas substitués ou sont substitués pas un groupe hydroxy, amino, alkylamino, dialkylamino, un atome d'halogène, un groupe alcoxy, aryle, aryloxy, alklcarbonylamino, arylcarbonylamino, alkylsulfonylamino ou sulfo.

7. Colorants selon la revendication 6, **caractérisés en ce que** KK représente un composant de copulation issu de l'une des classes suivantes: les acétoacétanilides, les phénols, les anilines, les diphénylamines, les naphtylamines, les indoles, les quinoléines, les pyridones, les pyrazoles, les quinolones et les aminopyridines, lesquels ne sont pas substitués ou sont substitués par un groupe hydroxy, amino, alkylamino, dialkylamino, un atome d'halogène, un groupe alcoxy, aryle, aryloxy, alkylcarbonylamino, arylcarbonylamino, alkylsulfonylamino ou sulfo.

8. Procédé de préparation de colorants de formule (2) selon la revendication 1, **caractérisé en ce que** l'on diazote un composé de formule 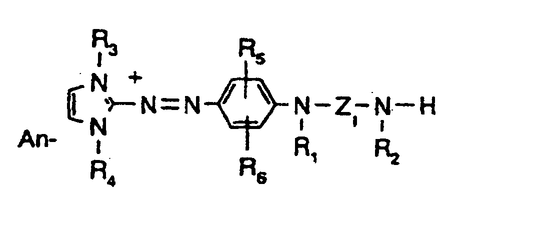 dans laquelle Z est un groupe 1,4-phénylène ou 1,4-naphtylène non substitué ou substitué par un groupe alkyle, alcoxy ou par un atome d'halogène et les groupes R₁, R₃, R₄, R₅, R₆ et An ont la signification indiquée pour les formules (2) et (4) dans la revendication 1, et R₂ représente un atome d'hydrogène, et on le copule avec un composant de copulation KK.

9. Procédé de préparation de colorants de formule (3) selon la revendication 1, **caractérisé en ce que** l'on fait réagir un composé de formule 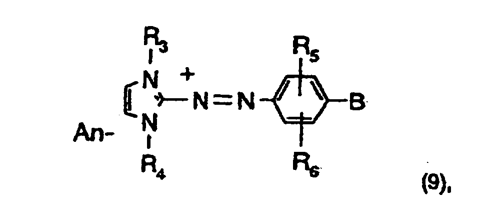 avec une diamine de formule 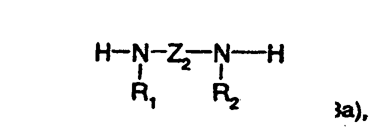 dans laquelle
B représente un groupe alcoxy ou un atome d'halogène et R₁, R₂, R₃, R₄, R₅, R₆, Z₂ et An ont les significations données pour les formules (3) et (4) dans la revendication 1.

10. Procédé de coloration de papier, **caractérisé en ce que** l'on traite le papier avec un colorant de formule (2) ou (3) selon la revendication 1.

11. Papier coloré obtenu selon le procédé selon la revendication 10.

12. Préparations solides de colorant pour la coloration de papier, **caractérisées en ce qu'**elles contiennent au moins un colorant selon la revendication 1.

13. Préparations liquides de colorant pour la coloration de papier, **caractérisées en ce qu'**elles contiennent au moins un colorant selon la revendication 1.

14. Mélanges de colorants, contenant un colorant de formule (2) ou (3) selon la revendication 1 et un colorant phtalocyanine de cuivre cationique.
